**Europäisches Patentamt**

(19) **European Patent Office**

**Office européen des brevets**

(11) Publication number: **0 216 810**
**B1**

(12) **EUROPEAN PATENT SPECIFICATION**

(45) Date of publication of patent specification: **22.08.90**

(21) Application number: **86901374.8**

(22) Date of filing: **04.02.86**

(86) International application number:
**PCT/EP86/00063**

(87) International publication number:
**WO 86/04658 14.08.86 Gazette 86/18**

(51) Int. Cl.⁵: **F 16 K 25/00, C 04 B 41/87**

(54) A process for manufacturing seal disk members having a low friction coefficient.

(30) Priority: **12.02.85 IT 6713885**

(43) Date of publication of application:
**08.04.87 Bulletin 87/15**

(45) Publication of the grant of the patent:
**22.08.90 Bulletin 90/34**

(84) Designated Contracting States:
**DE FR**

(56) References cited:
**EP-A- 63 762**
**DE-A-2 834 146**
**DE-A-3 210 289**
**FR-A-2 207 883**
**FR-A-2 524 105**
**GB-A- 670 249**
**US-A-4 239 819**
**US-A-4 288 495**

(73) Proprietor: **GEVIPI A.G.**
**Aeulestrasse 5 Postfach 83 Triesen**
**FL-9490 Vaduz (LI)**

(72) Inventor: **KNAPP, Alfons**
**Bleicherstrasse 3**
**D-7950 Biberach/Riss (DE)**
Inventor: **BUZZI, Günter**
**Am Häberlesberg 11**
**D-7622 Schiltach (DE)**

(74) Representative: **Patrito, Pier Franco, Dr. Ing.**
**Cabinet PATRITO BREVETTI Via Don Minzoni 14**
**I-10121 Torino (IT)**

Courier Press, Leamington Spa, England.

## Description

### Technical field

This invention relates to hard material seal disk members of the type in which the sealing effect is due to precise finish of the sealing members, which are movable in mutual direct contact without interposition of any gasket made of a yielding material. Examples of pair of seal members of this kind are found in hard material disks for faucets, in industrial valves, in injection pumps for diesel engines and so on. In the following, referenc will be particularly made to the very significant case of hard material disks for faucets, however it should be understood that this does not constitute any limitation to the field of application of the invention.

### Background of the invention

The hard material disks used as flow interception and regulation members in faucets for hydraulic appliances are conventionally made of aluminium oxides or silicates, sintered and then ground to a roughness of about 0.2 to 0.4 microns. Because of these very accurately finished surfaces, said disks form members capable of effectively intercepting and regulating a flow of water, and due to their hardness, which ranges in the order of 23,000 $N/mm^2$, they have a long life and are capable of pushing out hard foreign bodies, such as sand grains which arrive to contact them, without suffering any damage. However, just because of this very accurate finish, these disks have a tendency to adhere to one another which, in the case of lack of lubricants, provides a high sliding friction, even higher than that due to the friction coefficient of such materials, which is per se relatively high, approaching 0.12. For a proper operation of faucets including such hard material disks, the disks are provided on their cooperating surfaces with a thin layer of silicone lubricant, which reduces the sliding friction to acceptable values. However, in the long run and with repeated mutual slidings of the disks, the silicone lubricant is gradually pushed out, and the friction increases to unacceptable levels. In extreme cases, the faucet may become locked.

Attempts have been made to manufacture the hard material disks for faucets by using wolfram carbide (widia). However the costs of production and machining of this material have proved to be prohibitive. According to EP—A—0.063.762 it has also been proposed to manufacture the pairs of disks for faucets with a material, equal for both disks, consisting of silicon carbide (SiC). The silicon carbide, in its known different crystallographic modifications, provides hardnesses ranging between 28,000 and 35,000 $N/mm^2$, which are much higher than those of the materials conventionally used for this purpose, while providing a friction coefficient approaching 0.05. In addition, this material has a reduced tendency to provide adhesion between machined surfaces having a smooth finish, so that it initially allows to effectively reduce, within certain limits, the friction between the cooperating disks of a faucet. However it has been found that, with a long use, the friction between two disks both made of silicon carbide greatly increases, until in this case too it reaches unacceptable levels.

According to the Italian Patent Application No. 67,746-A/82 it has further been proposed by the same Applicant, in a pair of disks for faucets, two disks made of hard materials having different characteristics, with at least one of said disks made of silicon carbide (SiC). Because of this provision a surprising and permanent reduction of the friction between the hard material disks is observed, even in the absence of any lubrication. Similar ceramic disks, having different characteristics in order to reduce friction, are known from FR—A—2524105. However, the manufacture and grinding of silicon carbide disks require the use of special machinery and technologies, which are not within the reach of all manufacturers. Hence, it was desirable to find a solution of the mentioned problem, which could be of more general use and therefore, in particular cases, even more economical.

According to GB—A—670,249 there have been proposed pair of valve members, wherein one of said valve members is made of a steel alloy subjected to a surface cyanide or nitrogen hardening process. However such process involves severe limitations in the nature of both the material forming the body of the valve member, which should necessarily be a particular steel alloy, and the material forming the hard surface of the valve member, which cannot be other than nitralloy steel. Moreover, although a main machining may be effected before the hardening process, a polishing and buffing operation is needed after hardening to remove the soft outer skin which is formed, and this operation modifies the finish given by the main machining, whereby the final finish is expensive or it cannot be very accurate. Therefore, such valve members are suitable for some applications, but cannot be of general use; for example, they would not be suitable for use as hard material disks in faucets.

Then, requirements similar to those described for the hard material disks for faucets generally arise for all hard material seal members which cooperate in direct mutual contact.

### Disclosure of invention

Considering these circumstances, the object of this invention is to provide hard material seal members having a limited cost of production and machining and capable of providing a sufficiently reduced friction coefficient, even in the absence of lubrication, so as to allow a proper operation of the apparatuses for a long period of time without requiring any intervention.

This object is attained, according to the invention, by a process for manufacturing a pair of disk members for a valve, each disk member of the pair having a machined working surface intended to sealingly cooperate with a working surface of the other disk member of the pair in order to regulate a flow of water, the working surface of each one of said disk members being made of a material selected in the group comprising aluminium oxides, aluminium silicates, ceramic materials, steatite, metals, synthetic materials and socalled tuflite, at least one of said working surfaces of said two disk members being coated with a material having a hardness higher than the hardness of the case material of the disk member, which forms a covering layer thin with respect to the thickness of the corresponding disk member, and said two cooperating working surfaces being different the one from the other in nature or finish, characterized in that the process comprises the step of applying said material covering at least one of said working surfaces by depositing, through a process of physical or chemical deposition from a gaseous medium, selected in the group comprising the processes called CVD and PVD, the surface modification by ion implantation, the ion implantation under laser treatment, the surface modification by ion irradiation, the plasma-CVD process, and the magnetic field assisted deposition process, the covering material being selected from the group comprising silicon carbide, carbides and nitrides of metals, especially of the transition metals, metal nitrites, particularly titanium nitrite and chromium nitrite and cubic chrystallographic lattice carbon.

Best modes for carrying out the invention

Among the highly hard materials which may be deposited for the purpose of the invention there are particularly the silicon carbide, the carbides and nitrides of metals, especially of the transition metals, metal nitrites, particularly titanium nitrite and chromium nitrite, and the cubic crystallographic lattice carbon.

Various processes of physical or chemical deposition from a gaseous medium are known, which may be used for forming the coating of a highly hard material as mentioned above. Among these processes there are particularly the CVD and PVD processes developed by the Battelle Institute, the surface modification by ion implantation, eventually under laser treatment, the surface modification by ion irradiation, the plasma-CVD process, and the magnetic field assisted deposition process by Leybold-Heraeus. Such processes have proved to be of particular advantage. Therefore, according to a preferred characteristic of this invention, at least one of the seal members is made of an at least moderately hard material coated with a material of high hardness by means of one of the just mentioned processes.

When applying the invention, it is necessary for both seal members to be made of an at least moderately hard material, to be able to receive a precise machining, since only a high degree of finish, such as that given by a precise grinding or lapping, enables the seal members to effectively perform the sealing action, either in a faucet or in any other device. However, unlike the conventional seal members, those of the present invention do not require their bodies to also have the wear resistance and the degree of hardness which are usually required. This is why, in a seal member coated by means of the deposition of a material of high hardness, the material forming the body of the seal member only serves as a support, whilst the cooperation with the other seal member is entirely entrusted to the material of high hardness deposited on at least one of the seal members. Therefore, the seal members according to the invention, or one of them, may also be made of a material which, though being hard and resistant enough to receive an appropriate finish and to maintain in the long run its shape, does not have per se acceptable qualities to form a seal member. Among these materials are included for example steatite, ceramic materials of modest quality, metals and some synthetic materials having high hardness, stiffness and stability. Also a material obtained by baking a mixture of a plastic powder and a hard material powder (socalled tuflite) can be used.

On the other hand, a seal member cooperating with a member coated with a highly hard material and having a high finish does not suffer any damage due to its limited hardness, and a considerable difference in hardness between the two cooperating surfaces turns out to be of advantage to reduce the friction coefficeint in the absence of lubrication. For this reason one of the seal members may lack any coating of highly hard material.

Alternatively, both seal members may be coated with materials of high hardness, but in this case the two cooperating surfaces must have sufficiently different characteristics, which may be obtained either by poroviding a coating with two different materials, or by applying the coating materials onto surfaces having different degrees of finish, or even by combining these two characteristics with one another.

An important advantage which may be suitably exploited in the use, according to this invention, of the highly hard material layers obtained by physical or chemical deposition from a gaseous medium, is that these layers do not substantially modify the degree of finish of the surfaces on which the deposition is carried out. Therefore, the disk intended to receive the deposition of a material at high hardness may be machined to a high degree of finish, for example by lapping, prior to carrying out the deposition, thus allowing working on a material which is sufficiently hard for receiving the desired finishing operation, but on the other hand is not so hard as to render difficult and expensive this operation or to require special equipments and technologies. This enables obtaining an important reduction in the manufacturing costs and allows the machining to be carried out by means of conventional machinery, by any manufacturer having no special equipments such as those required, for example, for lapping a seal member made of silicon carbide.

The use of pairs of cooperating seal members, one of which, owing to its coating, has a hardness considerably higher than that of the other seal member, and has a high surface finish, allows to employ for the other seal member a material of lower hardness, not coated, and having a rougher surface including a high number of microscopic recesses which substantially reduce the bearing surface between the cooperating seal members. Due to this peculiarity a further reduction of the dry sliding friction between the seal members takes place, and further important economies in the manufacturing costs are obtained, inasmuch as the machining of the not coated member is not only less expensive per se, but it may also be limited to a rougher degree of finish.

Particularly, an advantage of the seal members coated by means of a deposition of silicon carbide is the high chemical stability of this compound. In fact, silicon carbide is not subject to corrosions or alternations in any kind of water, and it provides an exceptional resistance to oxidation. A similar behaviour is also given by other materials among those of high hardness which may be deposited from a gaseous medium, and especially by carbon having a cubic crystallographic lattice. This material, which could in no way be used to form the body of a seal member, is very advantageous also for its reduced friction coefficient, which approaches the value of 0.02.

Of course, the invention may be used independently of the shape and number of the seal members employed in an apparatus; such seal members may be flat or they can form bodies whose working surfaces are convex or concave, for example as those of a sphere or a cylinder.

The application of this invention allows to ensure the smoothness in the control of the apparatuses which embody such seal members, independently from the presence of a lubricant, for periods of time which are much longer then those obtained hitherto, and this without practically increasing the cost of the seal members. In effect, the anyway limited cost of the process of deposition from a gaseous medium is at least approximately counterbalanced by the lower cost of the materials forming the seal members and by a lower cost of the working.

Possible industrial applications

This invention finds a particularly interesting utilization in valves and faucets, both in those of the more largely used type, having two substantially disc-shaped plaques, and in those having three substantially disc-shaped plaques, or a single disc-shaped plaque cooperating with sleeve-shaped plaques placed at the inlets. Also the invention can be used both in those valves in which the plaques are crossed in only one direction by the water, which then enters the body of the valve or of a cartridge, and in those valves in which the water flows through the plaques firstly in a direction and then in the opposite direction.

However, the application of the invention to valves and faucets is not exclusive and, as already pointed out above, other possibilities of application of the pairs of seal members according to the invention are for example the industrial valves, particularly those subject to high temperatures and/or to the action of chemical products, the valves and pistons for injection pumps of diesel engines, and so on.

**Claims**

1. A process for manufacturing a pair of disk members for a valve, each disk member of the pair having a machined working surface intended to sealingly cooperate with a working surface of the other disk member of the pair in order to regulate a flow of water, the working surface of each one of said disk members being made of a material selected in the group comprising aluminium oxides, aluminium silicates, ceramic material, steatite, metals, synthetic materials and socalled tuflite, at lesat one of said working surfaces of said two disk members being coated with a material having a hardness higher than the hardness of the core material of the disk member, which forms a covering layer thin with respect to the thickness of the corresponding disk member, and said two cooperating working surfaces being different the one from the other in nature or finish, characterized in that the process comprises the step of applying said material covering at least one of said working surfaces by depositing, through a process of physical or chemical deposition from a gaseous medium, selected in the group comprising the processes called CVD and PVD, the surface modification by ion implantation, the ion implantation under laser treatment, the surface modification by ion irradiation, the plasma-CVD process, and the magnetic field assisted deposition process, the covering material being selected from the group comprising silicon carbide, carbides and nitrides of metals, especially of the transition metals, metal nitrites, particularly titanium nitrite and chromium nitrite and cubic chrystallographic lattice carbon.

2. A process as claimed in Claim 1, characterized in that only one of said disk members is coated with a material having a hardness higher than the hardness of the core material, whereas the other disk member is not coated and its working surface is machined to a degree of finish rougher than that of the working surface of the first disk member.

3. A process as claimed in Claim 1, characterized in that the cooperating working surfaces of said two disk members are coated with two different materials selected from said group of materials.

4. A process as claimed in Claim 1, characterized in that the cooperating working surfaces of said two disk members are machined to a different degree of finish, before applying the coating materials.

## Patentansprüche

1. Verfahren zur Herstellung eines Paares plattenförmiger Elemente für ein Ventil, bei dem jedes plattenförmige Element dieses Paares eine dazu bestimmte bearbeitete Arbeitsfläche aufweist, zusammen mit einer Arbeitsfläche des anderen plattenförmigen Elements des Paares eine abdichtende Wirkung auszuüben, um einen Wasserdurchfluss zu regeln, bei dem die Arbeitsflächen der plattenförmige Elemente je aus einem Material bestehen, das aus der Gruppe gewählt wurde, die Aluminiumoxyde, Aluminiumsilikate, Keramikstoffe, Steatit, Metalle, Kunststoffe und den sogenannten Tuflite umfasst, bei dem wenigstens eine der Arbeitsflächen der beiden plattenförmigen Elemente mit einem Material überzogen ist, das härter als das Material des plattenförmigen Elements ist und das eine Deckschicht bildet, die dünner als das entsprechende plattenförmige Element ist, und bei dem sich die beiden zusammenwirkenden Arbeitsflächen in ihrer Natur oder in ihrer beschaffenheit voneinander unterscheiden, dadurch gekennzeichnet, dass das Verfahren den Vorgang umfasst, bei dem das Beschichtungsmaterial auf wenigstens eine der Arbeitsflächen aufgetragen wird, und zwar dadurch, dass ein Beschichtungsmaterial aus der Gruppe, die Siliziumkarbid, Metallkarbide und Metallnitride, insbesondere Karbide und Nitride aus Übergangsmetallen, Metallnitrite, insbesondere Titannitrit und Chromnitrit, sowie Kohlenstoff mit kubischem Kristallgitter umfasst, mit Hilfe eines physikalischen oder chemischen Absetzverfahrens aus einem gasförmigen Medium abgesetzt wird, wobei dieses Verfahren aus der Gruppe der Verfahren gewählt wird, die die sogenannten CVD- und PVD- Verfahren, die Veränderung der Oberfläche mittels einer Ionenanlage, die Ionenanlage unter Laserbestrahlung, die Veränderung der Oberfläche mittels Ionenausstrahlung, das CVD-Plasmaverfahren und das magnetfeldunterstützte Niederschlagverfahren umfasst.

2. Verfahren nach Anspruch 1, dadurch gekennzeichnet, dass nur das eine der beiden plattenförmigen Elemente mit einem Material verkleidet wird, dessen Härte grösser als die Härte des Materials des Plattenkörpers ist, während das andere plattenförmige Element nicht verkleidet ist und seine Arbeitsfläche bis zu einer Beschaffenheit bearbeitet wird, die eine höhere Rauheit als die Arbeitsfläche des ersten plattenförmigen Elements aufweist.

3. Verfahren nach Anspruch 1, dadurch gekennzeichnet, dass die zusammenwirkenden Arbeitsflächen der beiden plattenförmigen Elemente mit zwei unterschiedlichen Werkstoffen aus der genannten Gruppe vorkleidet werden.

4. Verfahren nach Anspruch 1, dadurch gekennzeichnet, dass die zusammenwirkenden Arbeitsflächen der beiden plattenförmigen Elemente mit unterschiedlicher Beschaffenheit bearbeitet werden, bevor das jeweilige Beschichtungsmaterial aufgetragen wird.

## Revendications

1. Procédé pour la fabrication d'un pair d'organes en plaque pour une soupape, dans lequel chaque organe en plaque de ce pair a une surface de travail usinée, destinée à coopérer de façon étanche avec une surface de travail de l'autre organe en plaque du pair à l'effet de régler un flux d'eau, dans lequel la surface de travail de chaque organe en plaque est constituée par un matériau choisi dans le groupe qui comprend les oxydes d'aluminium, les silicates d'aluminium, les matériaux céramiques, la stéatite, les métaux, les matières synthétiques et l'ainsi dite tuflite, dans lequel au moins l'une desdites surfaces de travail desdits deux organes en plaque est recouverte par un matériau dont la dureté est plus grande que la dureté du matériau constituant le corps de l'organe en plaque, ce matériau de revêtement formant une couche de recouvrement mince par rapport à l'épaisseur de l'organe de plaque correspondant, et dans lequel lesdites deux surfaces de travail sont différentes l'une de l'autre par leur nature ou par leur finition, caractérisé en ce que le procédé comprend l'opération d'appliquer ledit matériau de recouvrement sur au moins l'une desdites surfaces de travail en déposant, au moyen d'un procédé de déposition physique ou chimique à partir d'un moyen gazeux, ce procédé étant choisi dans le groupe qui comprend les procédés dits CVD et PVD, la modification de la surface moyennant insertion d'ions, l'insertion d'ions sous traitement par laser, la modification de la surface moyennant irradiation d'ions, le procédé plasma-CVD et le procédé de déposition assisté par un champ magnètique, un matériau de recouvrement choisi dans le groupe comprenant le carbure de silicium, Ikes carbures et les nitrures des métaux, spécialement des métaux de transition, les nitrites de métaux, spécialement le nitrite de titane et le nitrite de chrome, et le carbone ayant un réseau cristallin cubique.

2. Procédé suivant la revendication 1, caractérisé en ce que l'un seuelement desdits éléments en plaque est recouvert par un matériau ayant une dureté plus grande que la dureté du matériau du corps, tandis que l'autre organe en plaque n'est pas recouvert et sa surface de travail est usinée jusqu'à un degré de finition plus rugueux que celui de la surface de travail du premier organe en plaque.

3. Procédé suivant la revendication 1, caractérisé en ce que les surfaces de travail coopérantes desdits deux organes en plaque sont recouvertes par deux matériaux différents choisis dans ledit groupe de matériaux.

4. Procédé suivant la revendication 1, caractérisé en ce que les surfaces de travail coopérantes desdits deux organes en plaque sont usinées jusqu'à deux degrés différents de finition, avant d'appliquer les matériaux de recouvrement.